# EUROPÄISCHE PATENTSCHRIFT

(11) **EP 1 164 069 B1**
(45) Veröffentlichungstag und Bekanntmachung des Hinweises auf die Patenterteilung: **07.05.2008**
(21) Anmeldenummer: 01114467.2
(22) Anmeldetag: 15.06.2001
(51) Int. Cl.: B62B 1/12

(54) **Transportroller mit zwei Trag- und Griffholmen**
Transport cart with two carrying bars and and two handle bars
Chariot de transport avec deux barres de transport et de manoeuvre

(30) Priorität: 17.06.2000 DE 20010817 U
(43) Veröffentlichungstag der Anmeldung: 19.12.2001
(73) Patentinhaber: LEIFHEIT Aktiengesellschaft, D-56377 Nassau (DE)
(72) Erfinder: Ohm, Heinz Josef, 65550 Limburg (DE); Fischer, Klaus Jürgen, 56379 Holzappel (DE)

(56) Entgegenhaltungen:
- DE-U- 9 116 974
- DE-U- 29 700 507
- US-A- 5 461 756
- US-A- 5 513 873
- US-A- 5 595 092

## Beschreibung

### Stand der Technik

Die Erfindung betrifft einen Transportroller entsprechend dem. Oberbegriff des Anspruches 1.

Derartige Transportroller sind beispielsweise aus der DE-U-91 16 974.7 bekannt und werden vornehmlich im Haushaltsbereich zum Transportieren von Koffern oder anderen schweren Gegenständen verwendet oder auch mit einem Behältnis versehen zum Einkaufen benutzt.

Ein Vorteil des gattungsgemäßen Transportrollers besteht darin, dass er auf relativ geringem Raum zusammengelegt werden kann und trotzdem über befriedigende Stabilität im Gebrauchszustand verfügt.

Aus DE-U-297 00 507 ist ein Transportroller mit einem rahmenartigen Gestell aus einem Unterteil und einem Oberteil, wobei das Oberteil etwa U-förmig gestaltet ist und mit seinen beiden Seitenschenkeln teleskopartig in den Schenkeln geführt ist, bekannt. Es ist eine Klemmvorrichtung vorgesehen, die aus zumindest einem in einer zwischen Ober- und Unterteil angeordneten Quertraverse geführten und mit einem stirnseitigen Ende auf die gegenüberliegenden Seitenschenkel des Oberteils aufdrückbaren Schieber besteht.

Zur Möglichkeit des Zusammenlegens des Transportrollers auf geringem Raum trägt in erheblichem Maß die Tatsache bei, dass das bügel- oder rahmenartige Element - welches zum einen der seitlichen Abstützung der zu transportierenden Last dient und zum anderen ein Griffstück zum Manövrieren des Transportrollers aufweist - zweiteilig ausgeführt ist in Form von Tragholmen, in denen sich Griffholme teleskopartig verschiebbar führen.

Zum Fixieren der jeweils eingestellten Lage der Griffholme gegenüber den Tragholmen dient eine Klemmvorrichtung, die im Bereich eines Verbindungsstückes ("Zwischenplatte") vorgesehen ist, in die die den Griffholmen zugekehrten Enden der Tragholme eingesteckt sind. Diese Klemmvorrichtung ist ausschließlich auf der einen Seite des erwähnten Verbindungsstückes für den einen der beiden Griffholme vorgesehen, so dass durch entsprechendes Betätigen der Klemmvorrichtung auch nur auf diesen einen Griffholm klemmend eingewirkt werden kann. - Der am Ende des anderen Griffholmes - und ebenfalls ausschließlich an diesem - vorgesehene, sich an die Innenwand des betreffenden Tragholmes anlegende Spreizkörper bewirkt zwar eine gewisse Reibung zwischen dem Griffholm und Tragholm, die allerdings in ihrer eine relative Längsverschiebung des einen Griffholms zum betreffenden Tragholm gezielt beeinflussenden Wirkung nicht mit der Wirkung der Klemmvorrichtung zu vergleichen ist, die gerade zum Verhindern einer ungewollten Relativbewegung des betreffenden Griffholmes ausgelegt ist.

Beim Gebrauch des bekannten Transportrollers hat sich ergeben, dass durch diese ungleichmäßige, unsymmetrische Beeinflussung bzw. Einwirkung einer Bremskraft auf die beiden Griffholme sich für den Benutzer des Transportrollers eine gewisse Unsicherheit im Gebrauch ergibt, die sich zum einen darin äußert, dass - im Klemmzustand des betreffenden Griffholmes - zwischen dem bügelartig ausgeführten Griffstück mit Griffholmen und den anschließenden Tragholmen keine sichere, feste Verbindung besteht, da der der Klemmvorrichtung abgekehrte Griffholm - entgegen der Wirkung der Reibkraft des erwähnten Spreizelementes - gewisse Bewegungen in Längsrichtung des betreffenden Tragholmes durchführen kann; zum anderen kann sich aber auch die Tatsache, dass nur auf den einen Griffholm gegebenenfalls klemmend eingewirkt wird, derart auf die Führungsbedingungen des betreffenden Griffholmes im Verbindungsstück bzw. im Tragholm auswirken, dass auch im gelösten Zustand der Klemmvorrichtung eine merkliche und leichte Bedienung und Benutzung des Transportrollers erschwerende, unterschiedliche Reibwiderstände für die beiden Griffholme einstellen.

### Aufgabe

Der vorliegenden Erfindung liegt die Aufgabe zugrunde, das durch Klemmung zu bewirkende Fixieren der Griffholme gegenüber den Tragholmen bzw. dem erwähnten Verbindungsstück derart durchzuführen wie auch die im Fall der aufgehobenen Klemmung auf die Griffholme wirkenden, sich einer Verschiebung in Längsrichtung der Griffholme widersetzenden (Reib-)Kräfte derart zu bewirken, dass zum einen in jeder Lage der fixierten Griffholme eine sichere, ausreichend feste Verbindung beider Griffholme mit dem jeweiligen Tragholm besteht und dass zum anderen bei gelöster Klemmung ein gleichmäßiges Herausziehen der Griffholme aus den Tragholmen bzw. Hineinschieben in diese ohne Probleme des Verkantens möglich ist.

### Lösung

Zur Lösung der vorstehend umrissenen Aufgabe wird die in Anspruch 1 genannte Erfindung vorgeschlagen.

Vorteilhafte oder zweckmäßige Ausgestaltungen der Erfindung sind in den Ansprüchen 2 bis 28 angegeben.

### Vorteile

Der erfindungsgemäße Transportroller bietet gegenüber dem vorbekannten Transportroller den Vorteil, dass auf die Griffholme sowohl im Fall der Klemmung als auch im Fall der aufgehobenen Klemmung bezüglich der bestehenden bzw. verbleibenden Klemm- bzw. Reibungskräfte gleichmäßig eingewirkt wird, wodurch zum einen eine sichere und feste Verbindung von Griff- und Tragholmen im Fall der Klemmung erzielt wird und zum anderen unproblematisches Verschieben der Griffholme gegenüber den Tragholmen möglich ist.

Außerdem hat die Erfindung den Vorteil, dass sie konstruktiv einfach ist und leichte Bedienbarkeit ermöglicht.

Die weitere Ausgestaltung dieser Ausführungsform entsprechend dem Vorschlag nach Anspruch 2 macht es möglich, dass die Klemmvorrichtungen stets vollkommen gleichmäßig auf die Griffholme wirken, und zwar sowohl im Fall der Klemmung der Griffholme als auch im Fall mehr oder weniger aufgehobener Klemmung.

Eine andere mögliche Ausführungsform der Erfindung nennt Anspruch 3. Bei dieser Ausführungsform ist die Einwirkung der einen Klemmvorrichtung auf den einen Griffholm unabhängig von der Einwirkung der dem anderen Griffholm zugeordneten Klemmvorrichtung.

Der Klemmkontakt an den Griffholmen besteht zweckmäßig entsprechend Anspruch 4 bei gestreckten Gelenkarmen, und zwar bevorzugt nach Maßgabe des Anspruches 5, wodurch eine gesonderte Verriegelung dieser Endstellung entfallen kann.

Allerdings ist es grundsätzlich auch möglich, dass der Klemmkontakt bei angewinkelten Gelenkarmen besteht, wie es im Anspruch 6 angegeben ist. In einem solchen Fall muss dann allerdings dafür gesorgt werden, dass eine entsprechende Endstellung derangewinkelten - Gelenkarme verriegelt werden kann.

Der Klemmkontakt des bzw. der Stellorgane der Klemmvorrichtungen mit den Griffholmen bzw. Tragholmen kann direkt oder indirekt bestehen, wie es in den Ansprüchen 7 bis 9 angegeben ist.

Zweckmäßige Details zur Gestaltung des Gelenkes zwischen den Gelenkarmen des Stellorgans der Klemmvorrichtungen nennen die Ansprüche 10 und 11.

Eine weitere, im Hinblick auf die bei der Klemmung in den beteiligten Konstruktionselementen auftretenden Kräfte vorteilhafte Ausgestaltung der Gelenkarme eines Stellorgans für die Klemmvorrichtungen gibt Anspruch 12 an.

Zum Erzielen eines Klemmkontaktes zwischen den betreffenden Bereichen des Stellorgans und den Griffholmen reicht es grundsätzlich aus, dass von einer - einzigen - Seite her entsprechend auf den Griffholm eingewirkt wird. Bevorzugt wird jedoch die Lösung angewendet, wie sie im Anspruch 13 beschrieben ist. Diese Lösung hat den Vorteil, dass die Griffholme - vom Stellorgan gesteuert - nach einer Klemmung, also zum Aufheben des Klemmkontaktes, kontrolliert in ihre Ausgangslage zurückbewegt werden.

Um den Griffholmen im für die Klemmung innerhalb des Verbindungsstückes vorgesehenen Bereich möglichst guten (Gegen-)Halt und gute, vorherbestimmte Führung zu geben, ist es ferner zweckmäßig, die Durchgangsbohrungen des Verbindungsstückes nach Maßgabe des Anspruches 14 auszulegen.

Zum Betätigen der Klemmvorrichtungen ist den Gelenkarmen des Stellorgans der Klemmvorrichtungen vorzugsweise eine Betätigungshandhabe zugeordnet, wie sie im Anspruch 15 angegeben ist.

Eine bevorzugte Lösung für die am Gelenk vorgesehenen und mit den an der Betätigungshandhabe befindlichen Antriebs- und Führungsmitteln korrespondierenden Antriebs- und Führungsmittel ist in Anspruch 16 angegeben. - Die Ansprüche 17 und 18 nennen zweckmäßige weitere Ausgestaltungen dieser Lösung, ebenso der Anspruch 19.

Im Hinblick auf kostengünstige Fertigung, insbesondere durch Spritzgießen, aber auch im Hinblick auf ein ästhetisch ansprechendes homogenes Äußeres schlägt Anspruch 20 einen bevorzugten Ort für die Lage der Schwenkachse der Betätigungshandhabe vor.

Anspruch 21 nennt eine konstruktiv vorteilhafte und herstellungsmäßig besonders einfache Lösung für ein Achslager an der Betätigungshandhabe.

Der leichten und sicheren Bedienbarkeit der erfindungsgemäßen Klemmvorrichtungen dient ferner das Konstruktionsdetail an der Betätigungshandhabe gemäß Anspruch 22.

Die im Anspruch 23 vorgeschlagenen Maßnahmen dienen der Sicherheit beim Bedienen der Klemmvorrichtungen und dem Verhindern des Eindringens von Schmutz etc. in den Bereich des bzw. der Gelenke des bzw. der Stellorgane der Klemmvorrichtungen.

Ergänzend zu der Lösung nach Anspruch 23 dienen auch die im Anspruch 24 genannten Details der Sicherheit und Leichtigkeit der Bedienung der Klemmvorrichtungen und bewirken überdies auch eine ansprechende Gestaltung des die Klemmvorrichtungen enthaltenden Verbindungsstückes.

Ein ebenfalls auf leichte Bedienbarkeit ausgerichtetes Detail der Betätigungshandhabe beschreibt Anspruch 25, mit einer bevorzugten weiteren Ausgestaltung, wie sie Anspruch 26 nennt.

Eine weitere nützliche und vorteilhafte Funktion in technischer wie auch in ästhetischer Hinsicht bieten die im Anspruch 24 erwähnten zapfenartigen Fortsätze, wenn sie entsprechend dem Vorschlag gemäß Anspruch 27 ausgeführt sind.

Schließlich ist das erfindungsgemäße Verbindungsstück mit Klemmvorrichtungen vorzugsweise aus Kunststoff, z.B. aus Polypropylen, hergestellt, wie es Anspruch 28 vorschlägt.

### Beschreibung der Erfindung an einem Ausführungsbeispiel

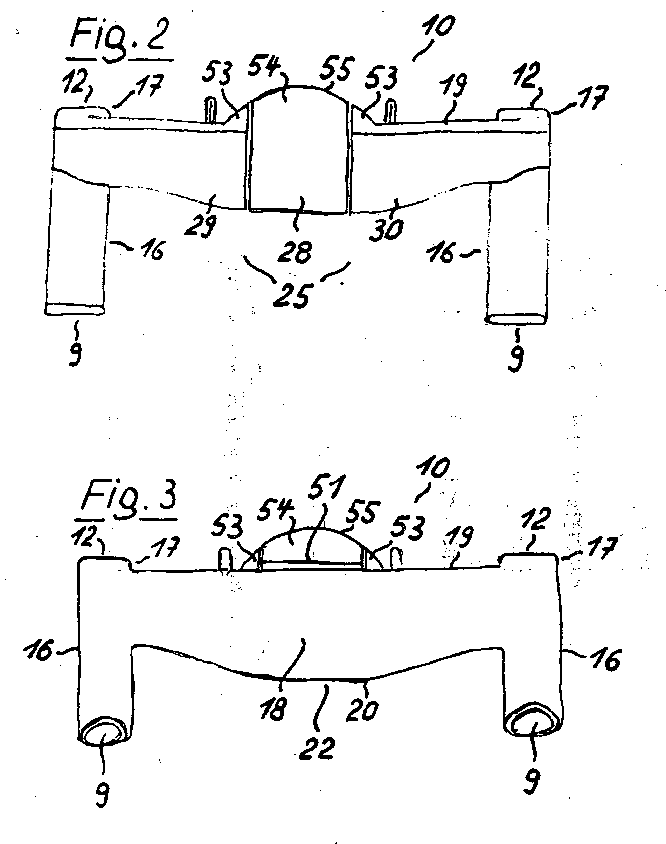

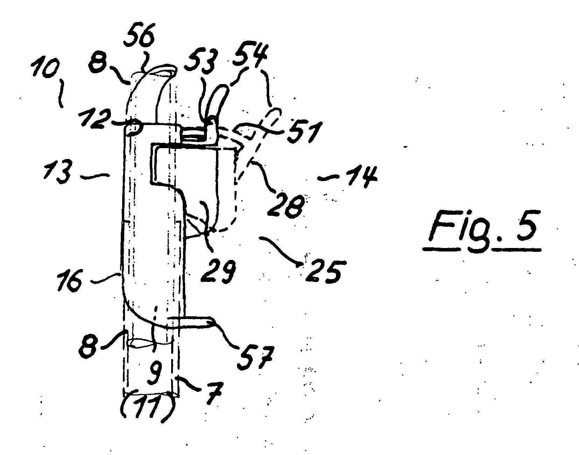

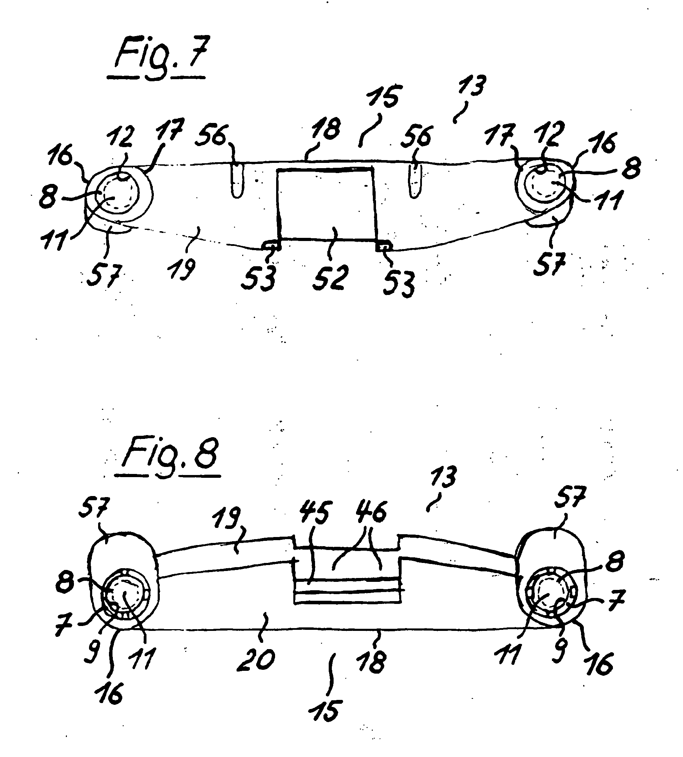

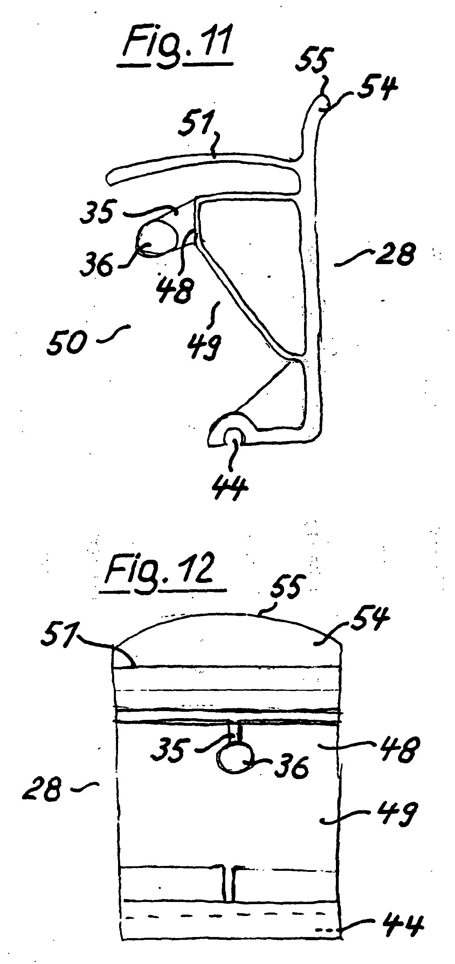

Anhand der Fig. 1 bis 12 der Zeichnung wird die Erfindung im folgenden an einem Ausführungsbeispiel näher erläutert.

Es zeigen
- Fig.1: einen Transportroller mit einem zwei Trag- und Griffholme aufnehmenden Verbindungsstück mit Klemmvorrichtungen in perspektivischer Darstellung,
- Fig. 2: eine Vorderansicht des Verbindungsstückes des Transportrollers nach Fig. 1,
- Fig. 3: eine Rückansicht des Verbindungsstückes nach Fig. 2,
- Fig. 4: eine Aufsicht auf das Verbindungsstück nach den Fig. 2 und 3,
- Fig. 5: eine Seitenansicht auf das Verbindungsstück nach den Fig. 2 bis 4,
- Fig. 6: eine Vorderansicht auf das Verbindungsstück nach den Fig. 2 bis 5, jedoch ohne Klemmvorrichtungen,
- Fig. 7: eine Aufsicht auf das Verbindungsstück nach Fig. 6, von oben gesehen,
- Fig. 8: eine Aufsicht auf das Verbindungsstück nach Fig. 6, von unten gesehen,
- Fig. 9: eine Ansicht des Stellorgans der Klemmvorrichtungen des Verbindungsstückes nach den Fig. 2 bis 5,
- Fig. 10: eine Aufsicht auf das Stellorgan nach Fig. 9, von oben gesehen,
- Fig. 11: die Betätigungshandhabe der Klemmvorrichtungen des Verbindungsstückes nach den Fig. 2 bis 5 und 9, 10 in der Seitenansicht und in größerem Maßstab, und
- Fig. 12: die Betätigungshandhabe nach Fig. 11 in der Rückansicht.

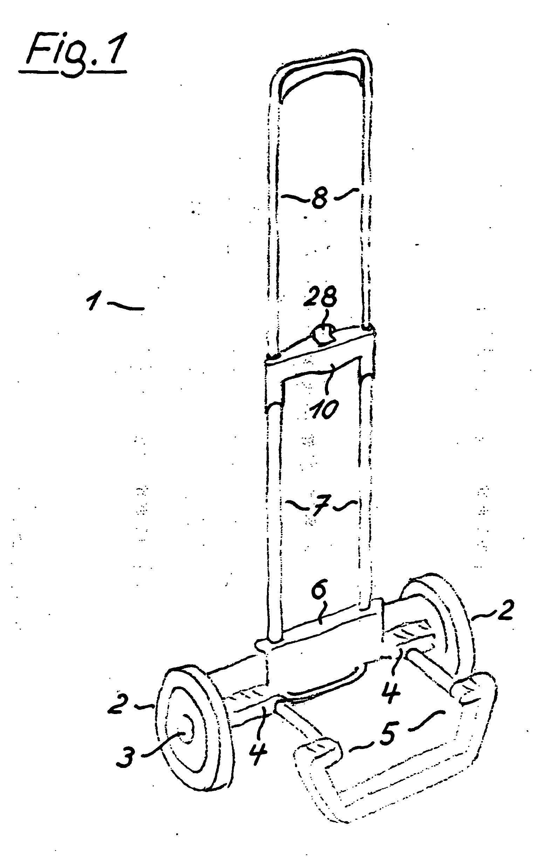

Fig. 1 zeigt einen Transportroller 1, der im wesentlichen aus einer Räder 2 tragenden Achse 3, einem mit der Achse 3 über Lagerböcke 4 verbundenen Tragbügel 5 und über eine Aufnahmeplatte 6 mit Achse 3 und Tragbügel 5 verbundenen rohrförmigen Tragholmen 7 besteht, in denen teleskopartig verschiebbar Griffholme 8 geführt sind, die an ihrem der Achse 3 abgekehrten Ende ein nicht näher bezeichnetes Griffstück aufweisen. Der Außendurchmesser der Griffholme 8 entspricht dabei annähernd dem Innendurchmesser der Tragholme 7, so dass sich die Griffholme 8 in den Tragholmen 7 verschiebbar führen.

Die der Achse 3 abgekehrten, nicht näher bezeichneten Enden der Tragholme 7 sind in Bohrungen 9 eines Verbindungsstückes 10 gesteckt und dort auf nicht näher bezeichnete Weise, z.B. durch Einrasten oder Klemmen, gehalten. Die Bohrungen 9 bilden den jeweils unteren Teil von zusammenfassend mit 11 bezeichneten Durchgangsbohrungen des Verbindungsstückes 10.

Der jeweils obere Teil der Durchgangsbohrungen 11 des Verbindungsstückes 10 ist durch Bohrungen 12 gebildet, deren Innendurchmesser dem Außendurchmesser der Griffholme 8 derart angepasst ist, dass sich die Griffholme 8 praktisch ohne oder ohne nennenswertes Spiel und zweckmäßig mit einer leichten Reibung in den Bohrungen 12 axial verschiebbar führen und dabei je nach Einstellung der Griffholme 8 zu den Tragholmen 7 mehr oder weniger tief in die Tragholme 7 eintauchen. - Um ein vollständiges Herausziehen der Griffholme 8 aus den Tragholmen 7 zu verhindern, kann den dem Tragholmen 7 zugekehrten Enden der Griffholme 8 jeweils ein nicht näher dargestellter, an sich bekannter Spreizkörper mit federnden Zungen zugeordnet sein, die einen im unteren Teil der Durchgangsbohrung 11 des Verbindungsstückes 10 befindlichen; nicht näher dargestellten Anschlag hintergreifen. Im übrigen kann dieser Spreizkörper in an sich bekannter Weise dazu dienen, für einen gewissen, gleichbleibenden Reibschluss zwischen den Enden der Griffholme 8 und den Innenwandungen der Tragholme 7 zu sorgen.

Das Verbindungsstück 10 besteht aus einem feststehenden, zusammenfassend mit 13 bezeichneten Teil und einem im Teil 13 gegenüber diesem beweglich gelagerten, zusammenfassend mit 14 bezeichneten Teil.

Der Teil 13 des Verbindungsstückes 10 besteht im wesentlichen aus einem Mittelteil 15 und das Mittelteil 15 seitlich abschließenden hülsenartigen Enden 16. In den hülsenartigen Enden 16 befinden sich die oben erwähnten Durchgangsbohrungen 11 mit Bohrungen 9 und 12.

Die zur Führung der Griffholme 8 vorgesehenen Bohrungen 12 sind hierbei in relativ kurzen, ringartigen Aufsätzen 17 vorgesehen, die sich um ein gewisses Maß über die umgebende Oberfläche des Teiles 13 erheben und die das auf der Zeichnung obere Ende der erwähnten Durchgangsbohrungen 11 bilden. - Die zur Aufnahme der betreffenden Enden der Tragholme 7 vorgesehenen Bohrungen 9 befinden sich im auf der Zeichnung unteren Teil der hülsenartigen Enden 16. Die Durchmesser der Bohrungen 9 und 12 sind unterschiedlich und in der zuvor schon beschriebenen Weise an die betreffenden Durchmesser von Trag- und Griffholmen 7 bzw. 8 angepasst.

Das Mittelteil 15 hat einen etwa U-förmigen Querschnitt und weist einen mittleren Wandungsteil 18 auf, an den sich ein oberer Wandungsteil 19 und ein unterer Wandungsteil 20 anschließen. Während sich der obere Wandungsteil 19 bis zu den außen liegenden Bereichen der hülsenartigen Enden 16 erstreckt und dementsprechend auch die Bohrungen 12 und die ringartigen Aufsätze 17 umfasst, geht der mittlere Wandungsteil 18 jeweils in einen teilzylindrischen Bereich 21 der Wandung der Durchgangsbohrung 11 über. Der untere Wandungsteil 20 verläuft - symmetrisch von einem mittleren Bereich 22 ausgehend - mit geringer werdendem Abstand zum oberen Wandungsteil 19 bis zu einem jeweils benachbarten Wandungsbereich 23 der Durchgangsbohrung 11. Auf diese Weise ist durch die Wandungsteile 18, 19 und 20 sowie durch die daran angrenzenden teilzylindrischen Bereiche 21 ein Raum 24 geschaffen, der das erwähnte, beweglich im Teil 13 gelagerte Teil 14 aufnimmt.

Der bewegliche Teil 14 des Verbindungsstückes 10 ist durch Klemmvorrichtungen 25 gebildet, die im wesentlichen aus einem kniegelenkartigen Stellorgan 26 mit zwei sich gegenüberliegend angeordneten, jeweils in Klemmkontakt mit einem Griffholm 8 bringbaren Enden 27 und einer mit dem Stellorgan 26 antriebsverbundenen Betätigungshandhabe 28 bestehen. Das Stellorgan 26 besteht aus zwei gleich langen Gelenkarmen 29, 30, die in einer quer zur Längsachse von Griff- und Tragholmen 8 bzw. 7 verlaufenden Ebene um ein gemeinsames Gelenk 31 schwenkbar am Verbindungsstück 10 gelagert sind. Das Gelenk 31 besteht dabei aus einem am Gelenkarm 29 vorgesehenen Gelenkzapfen 32, der sich in einer am Gelenkarm 30 vorgesehenen Gelenkbohrung 33 führt. In einem in der Zeichnung - entsprechend dem Gebrauchszustand des Transportrollers 1 - oberhalb des Gelenkes 31 liegenden Bereich befindet sich koaxial zum Gelenk 31 eine teilzylindrische Nut 34, die als Antriebs- und Führungsmittel für das Stellorgan 26 dient und die mit Antriebs- und Führungsmitteln korrespondiert, die in Form eines an der weiter unten noch zu beschreibenden Betätigungshandhabe 28 befindlichen Stellzapfens 35 mit kugelartigem Ende 36 ausgebildet sind.

Die Gelenkarme 29, 30 weisen an ihrem dem Gelenk 31 abgekehrten Ende jeweils eine Durchgangsöffnung 37 für einen Griffholm 8 auf. Die Durchgangsöffnungen 37 der Gelenkarme 29, 30 bilden den jeweils mittleren Teil der Durchgangsbohrungen 11 des Verbindungsstückes 10.

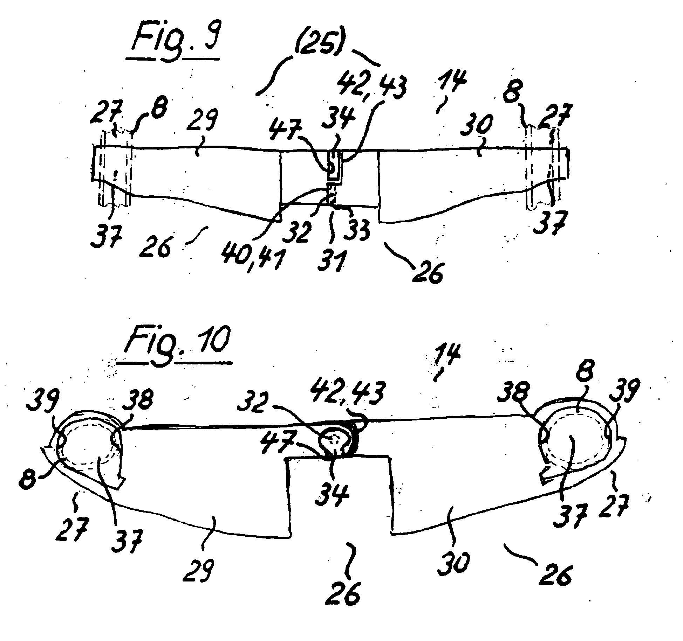

Im Bereich der Durchgangsöffnungen 37 befinden sich in Längsrichtung der Gelenkarme 29, 30 einander gegenüberliegende Wandungsbereiche 38, 39, deren gegenseitiger Abstand derart bemessen ist, dass diese Wandungsbereiche 38, 39 am betreffenden Griffholm 8 anliegen. Die durch die Durchgangsöffnungen 37 gesteckten Griffholme 8 sind in den Fig. 9 und 10 der Zeichnung gestrichelt dargestellt.

Die Gelenkarme 29, 30 des Stellorgans 26 führen und halten sich also quer zur Längsachse der Griffholme 8 bzw. quer zur Längsrichtung der Durchgangsöffnungen 37 an den Griffholmen 8 selbst, während die Gelenkarme 29, 30 parallel zur Längsachse der Griffholme 8 durch den oberen und unteren Wandungsteil 19 bzw. 20 des Mittelteils 15 sowie durch den teilzylindrischen Bereich 21 und den Wandungsbereichen 23 benachbarte Wandungsbereiche an den hülsenartigen Enden 16 gehalten und geführt sind. Darüber hinaus sind die Gelenkarme 29, 30 des Stellorgans 26 im Bereich des Gelenkes 31 auch durch die schon erwähnten, miteinander korrespondierenden Antriebs- und Führungsmittel von Stellorgan 26 und Betätigungshandhabe 28 sowie durch weitere, unterstützend wirkende Bereiche der Betätigungshandhabe 28 gehalten und geführt.

Den Gelenkarmen 29, 30 sind im Bereich des Gelenkes 31 teilzylindrische, zum Gelenk 31 koaxiale Stützflächen 40, 41, 42 und 43 zugeordnet. Die Stützflächen 40 und 41 sowie 42 und 43 bilden jeweils ein Stützflächenpaar 40, 41 bzw. 42, 43, wobei das Stützflächenpaar 40, 41 dem Gelenkzapfen 32 bzw. der Gelenkbohrung 33 zugeordnet ist, während das Stützflächenpaar 42, 43 der im Gelenkarm 29 oberhalb von Gelenkzapfen 32 und Gelenkbohrung 33 befindlichen teilzylindrischen Nut 34 benachbart ist. - Die Stützflächenpaare 40, 41 und 42, 43 stellen eine Ergänzung der Gelenkfunktion des Gelenkes 31 insoweit dar, als diese Stützflächenpaare 40, 41 und 42, 43 zur Aufnahme von in Längsrichtung der Gelenkarme 29, 30 und quer zur Längsachse des Gelenkzapfens 32 gerichteten Druckkräften geeignet und dafür bestimmt sind.

Die schon erwähnte Betätigungshandhabe 28 weist an ihrem unteren Ende auf der dem Verbindungsstück 10 abgekehrten, außenliegenden Seite eine nutartige Achsführung 44 auf, mit der sich die Betätigungshandhabe 28 auf einer Schwenkachse 45 führt und abstützt.

Die Schwenkachse 45 für die Betätigungshandhabe 28 ist innerhalb einer Ausnehmung 46 vorgesehen, die sich mittig im unteren Wandungsteil 20 des Mittelteils 15 des Verbindungsstückes 10 befindet. Die Ausnehmung 46 ist dabei derart bemessen, dass sie der nutartigen Achsführung 44 benachbarte Bereiche der Betätigungshandhabe 28 aufnimmt und seitlich führt.

Die Betätigungshandhabe 28 trägt auf der den Gelenkarmen 29, 30 zugekehrten Seite mit Abstand zur Achsführung 44 den schon erwähnten Stellzapfen 35 mit kugelartigem Ende 36. Der Stellzapfen 35 führt sich mit dem kugelartigen Ende 36 in der teilzylindrischen Nut 34 des Gelenkarmes 29, wobei der Durchmesser des kugelartigen Endes 36 geringfügig kleiner ist als der Durchmesser der Nut 34, jedoch größer ist als der dem Stellzapfen 35 zugekehrte, mit 47 bezeichnete Schlitz der Nut 34. Hierdurch ist zwar eine Relativbewegung des Stellzapfens 35 mit Ende 36 in einer zur Längsachse der Nut 34 parallel verlaufenden Richtung möglich, nicht jedoch eine Relativbewegung in einer quer zur Längsachse der Nut 34 sowie der Schwenkachse 45 verlaufenden Richtung. Das bedeutet, dass der Stellzapfen. 35 mit Ende 36 einerseits und die teilzylindrische Nut 34 andererseits miteinander korrespondierende Antriebs- und Führungsmittel für das Stellorgan 26 an der Betätigungshandhabe 28 bzw. am Gelenkarm 29 des Stellorgans 26 bilden.

Der Stellzapfen 35 mit kugelartigem Ende 36 befindet sich an einem als Druckfläche 48 wirkenden Flächenbereich eines profilartig geformten Bereiches 49 auf der mit 50 bezeichneten Rückseite der Betätigungshandhabe 28. Die Druckfläche 48 ist bei entsprechender Bewegung der Betätigungshandhabe 28 in Druckkontakt mit gegenüberliegenden Bereichen der Gelenkarme 29, 30 bringbar.

An dem der Achsführung 44 abgekehrten Ende und oberhalb des Stellzapfens 35 weist die Betätigungshandhabe 28 einen laschenartigen Fortsatz 51 auf mit einer dem Abstand zur Achsführung 44 entsprechenden Krümmung. Dem Fortsatz 51 ist eine auf dem oberen Wandungsteil 19 des Mittelteils 15 des Verbindungsstückes 10 vorgesehene, entsprechend gekrümmt ausgeführte Deckfläche 52 zugeordnet.

Seitlich neben der Deckfläche 52 für den laschenartigen Fortsatz 51 und dicht benachbart zur freien Außenkante des oberen Wandungsteils 19 des Mittelteils 15 befinden sich in einer quer zur Bewegungsrichtung des Fortsatzes 51 verlaufenden Flucht liegend zapfenartige Fortsätze 53 auf dem Wandungsteil 19. Die zapfenartigen Fortsätze 53 sind mit einem gewissen geringen Abstand zu der jeweils benachbarten Kante des laschenartigen Fortsatzes 51 an das Wandungsteil 19 angeformt. Dadurch führt sich der Fortsatz 51 bei einer Schwenkbewegung der Betätigungshandhabe 28 zwischen den zapfenartigen Fortsätzen 53.

Das der Schwenkachse 45 bzw. der Achsführung 44 abgekehrte Ende der Betätigungshandhabe 28 kragt um ein gewisses Maß über den benachbarten Oberflächenbereich des oberen Wandungsteils 19 hinaus, so dass ein gegenüber diesem Bereich des Verbindungsstückes 10 sich genügend abhebender und für den Benutzer des Transportrollers 1 also leicht ergreifbarer Griffbereich 54 gebildet ist. Dabei ist der Verlauf der mit 55 bezeichneten Kante dieses Endes der Betätigungshandhabe 28 zu den Seiten hin symmetrisch abfallend gerundet, so dass die beiden Enden der gerundeten Kante 55 dem jeweils benachbarten Oberflächenbereich des Wandungsteils 19 nahe liegen. Zweckmäßig ist die Anordnung dabei so getroffen, dass die oben schon erwähnten, der seitlichen Führung der Betätigungshandhabe 28 dienenden zapfenartigen Fortsätze 53 den erwähnten gerundeten Verlauf der Kante 55 des Griffbereiches 54 bis zu dem benachbarten Oberflächenbereich des oberen Wandungsteils 19 fortsetzen.

Das Verbindungsstück 10 mit Klemmvorrichtungen 25 ist zweckmäßig aus Kunststoff hergestellt, beispielsweise aus Polypropylen.

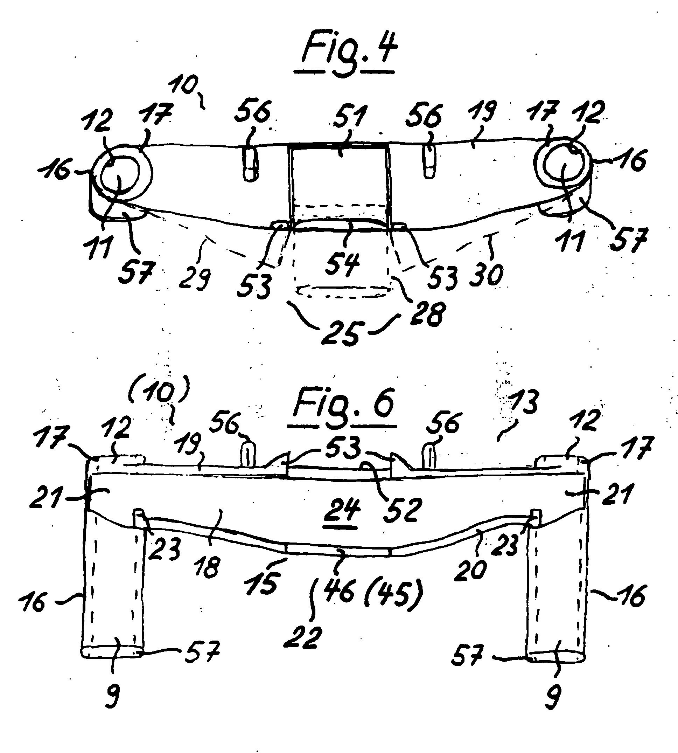

Die Wirkungsweise der Klemmvorrichtungen 25 am Verbindungsstück 10 ist wie folgt:
Zum Ändern einer gegebenen relativen Lage von Griff- und Tragholmen 8 bzw. 7 wird die Betätigungshandhabe 28 durch entsprechendes Bedienen ihres Griffbereiches 54 um die Schwenkachse 45 in die in Fig. 4 gestrichelt dargestellte Lage geschwenkt. Bei dieser Schwenkbewegung werden die beiden Gelenkarme 29, 30 des Stellorgans 26 mittels der an der Betätigungshandhabe 28 bzw. am Stellorgan 26 befindlichen Antriebs- und Führungsmittel (Stellzapfen 35 mit Ende 36 bzw. Nut 34) in die in Fig. 4 ebenfalls gestrichelt dargestellte Position bewegt. Hierdurch wird der Abstand zwischen den beiden Durchgangsöffnungen 37 am Ende des einen bzw. des anderen Gelenkarmes 29 bzw. 30 soweit verringert, dass der Klemmkontakt, der zuvor zwischen dem jeweiligen Wandungsbereich 38 und dem jeweiligen Griffholm 8 bestand, aufgehoben ist. Damit ist es dann möglich, die Griffholme 8 relativ zu den Tragholmen 7 teleskopartig in diese hinein oder aus diesen heraus zu verschieben, gegebenenfalls unter Überwindung gewisser, bewusst vorgesehener Reibungswiderstände durch Anwendung von an sich bekannten Spreizkörpern oder ähnlichem.

Unterstützend beim Lösen der Klemmverbindung oder des Klemmkontaktes wirkt sich die Tatsache aus, dass mittels der Wandungsbereiche 39 der Durchgangsöffnungen 37 der Gelenkarme 29, 30 die Griffholme 8 in ihre der aufgehobenen Klemmung zugeordnete Achslage in kontrollierter Weise "gezogen" werden.

Sodann wird zum Fixieren der gewünschten, eingestellten relativen Lage von Griff- und Tragholmen 8 bzw. 7 die Betätigungshandhabe 28 wieder zurück in ihre Ausgangsposition - dicht anliegend an dem Mittelteil 15 des Verbindungsstückes 10 - bewegt. Bei dieser Bewegung der Betätigungshandhabe 28 werden die Gelenkarme 29, 30 bis in ihre maximal mögliche Strecklage ("Totpunkt" des kniegelenkartigen Stellorgans 26) gestreckt, vorzugsweise um ein gewisses geringes Winkelmaß darüber hinaus, wodurch der Abstand zwischen den beiden Durchgangsöffnungen 37 wieder auf das ursprüngliche Maß eingestellt - vergrößert - ist.

Infolge der erwähnten Abstandsvergrößerung wird mittels der Wandungsbereiche 38 der Gelenkarme 29, 30 ein entsprechender Druck auf den jeweils benachbarten Wandungsbereich der - im übrigen durch die Bohrungen 12 und durch die Innenwandungen der Tragholme 7 quer zu ihrer Längsachse gehaltenen - Griffholme 8 ausgeübt, der im Zusammenwirken mit dem Reibungskoeffizienten zwischen den sich einander gegenüberliegenden Flächen die erwünschte Klemmung der beiden Griffholme 8 und damit deren Fixierung gegenüber den Tragholmen 7 bewirkt.

Die erzielbare Klemmung ist dadurch noch besser in ihrer Größe vorherbestimmbar, dass die Griffholme bereits im Bereich des Eintritts in das Verbindungsstück 10 - also im Bereich der erwähnten Bohrungen 12 - bezüglich ihres gegenseitigen Abstandes definiert und straff im Verbindungsstück 10 gehalten sind. Darüber hinaus ist ein derartiger, zusätzlich auch im tieferliegenden Bereich der Durchgangsbohrungen 11 des Verbindungsstückes 10, nämlich im Bereich der Innenwandungen der Tragholme 7, bestehender Halt diesem Zweck nützlich.

Am Verbindungsstück 10 befinden sich im übrigen noch Merkmale, die der zweckmäßigen Anbringung eines Behältnisses dienen. Hierzu gehören insbesondere zapfenartige Fortsätze 56 auf der der Betätigungshandhabe 28 abgekehrten Seite auf dem oberen Wandungsteil 19 und laschenartige Fortsätze 57 auf der Seite der Betätigungshandhabe 28 im unteren Bereich der hülsenartigen Enden 16.

### BEZUGSZEICHENLISTE

- 1: Transportroller
- 2: Räder
- 3: Achse
- 4: Lagerböcke
- 5: Tragbügel
- 6: Aufnahmeplatte
- 7: Tragholme
- 8: Griffholme
- 9: Bohrungen
- 10: Verbindungsstück
- 11: Durchgangsbohrungen
- 12: Bohrungen
- 13: Teil, feststehend
- 14: Teil, beweglich
- 15: Mittelteil
- 16: Enden, hülsenartig
- 17: Aufsätze, ringartig
- 18: Wandungsteil, mittlerer
- 19: Wandungsteil, oberer
- 20: Wandungsteil, unterer
- 21: Bereich, teilzylindrisch
- 22: Bereich, mittlerer
- 23: Wandungsbereich (der Durchgangsbohrungen 11)
- 24: Raum (für das Stellorgan 26)
- 25: Klemmvorrichtungen
- 26: Stellorgan
- 27: Enden
- 28: Betätigungshandhabe
- 29: Gelenkarm
- 30: Gelenkarm
- 31: Gelenk
- 32: Gelenkzapfen
- 33: Gelenkbohrung
- 34: Nut, teilzylindrisch
- 35: Stellzapfen
- 36: Ende, kugelartig
- 37: Durchgangsöffnung
- 38: Wandungsbereich
- 39: Wandungsbereich
- 40: Stützfläche, teilzylindrisch
- 41: Stützfläche, teilzylindrisch
- 42: Stützfläche, teilzylindrisch
- 43: Stützfläche, teilzylindrisch
- 44: Achsführung, nutartig
- 45: Schwenkachse
- 46: Ausnehmung
- 47: Schlitz (in Nut 34)
- 48: Druckfläche
- 49: Bereich
- 50: Rückseite
- 51: Fortsatz, laschenartig
- 52: Deckfläche
- 53: Fortsätze, zapfenartig
- 54: Griffbereich
- 55: Kante
- 56: Fortsätze, zapfenartig
- 57: Fortsätze, laschenartig

## Patentansprüche

1. Transportroller (1) mit zwei Tragholmen (7), die an ihrem einen Ende mit einer zwei Räder (2) tragenden Achse (3) sowie mit einem Tragbügel oder Tragrahmen (5) verbunden sind und die an ihrem anderen Ende über ein Verbindungsstück (10) miteinander verbunden sind, das Durchgangsbohrungen (11) für zwei Griffholme (8) aufweist, deren eine Enden über ein Griffstück miteinander verbunden sind und deren andere Enden in den Tragholmen (7) teleskopartig verschiebbar geführt sind, wobei das Verbindungsstück (10) eine Klemmvorrichtung (25) aufweist zum Fixieren der Lage der Griffholme (8) gegenüber den Tragholmen (7), wobei beiden Griffholmen (8) bzw. Tragholmen (7) jeweils eine Klemmvorrichtung (25) im oder am Verbindungsstück (10) zugeordnet ist, **dadurch gekennzeichnet, dass** die Klemmvorrichtungen (25) ein gemeinsames, kniegelenkartig ausgebildetes und von Hand betätigbares Stellorgan (26) aufweisen, dessen Gelenkarme (29, 30) in einer quer zur Längsachse von Griff- und Tragholmen (8 bzw. 7) verlaufenden Ebene um ihr gemeinsames Gelenk (31) schwenkbar im oder am Verbindungsstück (10) gelagert sind, wobei dessen dem Gelenk (31) abgekehrte Enden der Gelenkarme (29, 30) direkt oder indirekt in Klemmkontakt mit dem jeweils benachbarten Griffholm (8) bringbar sind oder mit dem jeweils benachbarten einen bzw. anderen Griffholm (8) bringbar sind und sich andererseits an einem Bereich des Verbindungsstückes (10) abstützen.

2. Transportroller nach Anspruch 1, **dadurch gekennzeichnet, dass** das Stellorgan (26) in einer zur Ebene der Längsachsen von Griff- und Tragholmen (8 bzw. 7) parallelen Ebene und quer zu deren Längsachsen verlaufenden Richtung in gewissem Ausmaß frei beweglich ("schwimmend") im oder am Verbindungsstück (10) gelagert ist zum Erzielen eines selbsttätigen Ausgleichs der von den Gelenkarmen (29, 30) des Stellorgans (26) auf die Griffholme (8) ausgeübten Kräfte.

3. Transportroller nach Anspruch 1, **dadurch gekennzeichnet, dass** der Klemmkontakt bei gestreckten Gelenkarmen (29, 30) besteht.

4. Transportroller nach Anspruch 3, **dadurch gekennzeichnet, dass** die dem Klemmkontakt zugeordnete Endstellung der Gelenkarme (29, 30) des Stellorgans (26) um ein gewisses Maß jenseits der Strecklage (des "Totpunktes") des Stellorgans (26) liegt.

5. Transportroller nach Anspruch 1, **dadurch gekennzeichnet, dass** der Klemmkontakt bei angewinkelten Gelenkarmen (29, 30) besteht.

6. Transportroller nach Anspruch 1, **dadurch gekennzeichnet, dass** der Klemmkontakt durch Druck auf einen Bereich der Griffholme (8) erfolgt.

7. Transportroller nach Anspruch 1, **dadurch gekennzeichnet, dass** der Klemmkontakt durch Druck auf einen Bereich der Tragholme (7) erfolgt.

8. Transportroller nach Anspruch 7, **dadurch gekennzeichnet, dass** derfür den Klemmkontakt vorgesehene Bereich des Tragholmes (7) als federnder Abschnitt ausgebildet ist.

9. Transportroller nach Anspruch 1, **dadurch gekennzeichnet, dass** das Gelenk (31) aus einem an dem einen Gelenkarm (29) befindlichen Gelenkzapfen (32) und einer an dem anderen Gelenkarm (30) vorgesehenen Gelenkbohrung (33) besteht.

10. Transportroller nach Anspruch 9, **dadurch gekennzeichnet, dass** die Gelenkverbindung der Gelenkarme (29, 30) lösbar ist.

11. Transportroller nach Anspruch 1, **dadurch gekennzeichnet, dass** den Gelenkarmen (29, 30) im Bereich des Gelenkes (31) befindliche, sich gegeneinander abstützende und zum Gelenk (31) koaxiale, teilzylindrische Stützflächen (40 bis 43) zugeordnet sind.

12. Transportroller nach Anspruch 1, **dadurch gekennzeichnet, dass** die Gelenkarme (29, 30) an dem dem Gelenk (31) abgekehrten Ende eine das Hindurchführen eines Griffholmes (8) ermöglichende Durchgangsöffnung (37) aufweisen mit in Längsrichtung des betreffenden Gelenkarmes (29 bzw. 30) sich einander gegenüberliegenden, am Griffholm (8) anliegenden Wandungsbereichen (38, 39).

13. Transportroller nach Anspruch 1, **dadurch gekennzeichnet, dass** der obere Bereich der im Verbindungsstück (10) vorgesehenen Durchgangsbohrungen (11) dem Außendurchmesser eines Griffholmes (8) angepasst ist.

14. Transportroller nach Anspruch 1, **dadurch gekennzeichnet, dass** den Gelenkarmen (29, 30) eine Betätigungshandhabe (28) zugeordnet ist, die am Verbindungsstück (10) um eine parallel zur Schwenkebene der Gelenkarme (29, 30) sowie parallel zur Ebene der Griff- bzw. Tragholme (8 bzw. 7) verlaufende Schwenkachse (45) schwenkbar am Verbindungsstück (10) gelagert ist und Antriebs- und Führungsmittel (Stellzapfen 35, kugelartiges Ende 36) aufweist, die mit im Bereich des Gelenkes (31) am einen und/oder am anderen Gelenkarm (29 bzw. 30) vorgesehenen Antriebs- und Führungsmitteln (teilzylindrische Nut 34) korrespondieren.

15. Transportroller nach Anspruch 14, **dadurch gekennzeichnet, dass** das am Gelenk (31) vorgesehene Antriebs- und Führungsmittel als teilzylindrische Nut (34) und das an der Betätigungshandhabe (28) vorgesehene Antriebs- und Führungsmittel als Stellzapfen (35) ausgebildet ist, der sich mit einem am freien Ende des Stellzapfens (35) befindlichen, kugelartigen Ende (36) in der erwähnten teilzylindrischen Nut (34) führt.

16. Transportroller nach Anspruch 15, **dadurch gekennzeichnet, dass** die im Bereich des Gelenkes (31) vorgesehenen Antriebs- und Führungsmittel (Nut 34) achsparallel zum Gelenk (31) in dem einen Gelenkarm (29) vorgesehen sind.

17. Transportroller nach Anspruch 16, **dadurch gekennzeichnet, dass** die im Bereich des Gelenkes (31) vorgesehenen Antriebs- und Führungsmittel (Nut 34) koaxial zum Gelenk (31) in dem einen Gelenkarm (29) vorgesehen sind.

18. Transportroller nach Anspruch 17, **dadurch gekennzeichnet, dass** sich die im Bereich des Gelenkes (31) der Gelenkarme (29, 30) vorgesehenen Antriebs- und Führungsmittel (Nut 34) im Gebrauchszustand des Transportrollers (1) oberhalb bzw. unterhalb des Gelenkes (31) befinden.

19. Transportroller nach Anspruch 14, **dadurch gekennzeichnet, dass** die Schwenkachse (45) für die Betätigungshandhabe (28) innerhalb einer benachbarte Bereiche der Betätigungshandhabe (28) aufnehmenden Ausnehmung (46) im Mittelteil (15) des Verbindungsstückes (10) vorgesehen ist.

20. Transportroller nach Anspruch 14, **dadurch gekennzeichnet, dass** der Schwenkachse (45) für die Betätigungshandhabe (28) eine auf der dem Verbindungsstück (10) abgekehrten Seite der Betätigungshandhabe (28) befindliche nutartige Achsführung (44) in der Betätigungshandhabe (28) zugeordnet ist.

21. Transportroller nach Anspruch 14, **dadurch gekennzeichnet, dass** die Betätigungshandhabe (28) auf der dem Gelenk (31) bzw. den im Bereich des Gelenkes (31) vorgesehenen Antriebs- und Führungsmitteln (Nut 34) zugekehrten Seite eine in Druckkontakt mit dem Gelenk (31) bzw. den erwähnten Antriebs- und Führungsmitteln (Nut 34) bringbare Druckfläche (48) aufweist.

22. Transportroller nach Anspruch 14, **dadurch gekennzeichnet, dass** die Betätigungshandhabe (28) an ihrem der nutartigen Achsführung (44) abgekehrten Ende einen laschenartigen Fortsatz (51) mit einer dem Abstand zu dieser Achsführung (44) bzw. zur Schwenkachse (45) der Betätigungshandhabe (28) entsprechenden Krümmung aufweist, dem eine entsprechend gekrümmte Deckfläche (52) am Verbindungsstück (10) zugeordnet ist.

23. Transportroller nach Anspruch 22, **dadurch gekennzeichnet, dass** seitlich neben der Deckfläche (52) für den laschenartigen Fortsatz (51) der Betätigungshandhabe (28) und in einer quer zur Bewegungsrichtung dieses Fortsatzes (51) verlaufenden Flucht liegend zapfenartige Fortsätze (53) am Verbindungsstück (10) vorgesehen sind, die mit einem gewissen geringen Abstand an das der Schwenkachse (45) abgekehrte Ende der Betätigungshandhabe (28) anschließend an das Verbindungsstück (10) angeformt sind und zwischen denen sich der laschenartige Fortsatz (51) der Betätigungshandhabe (28) führt.

24. Transportroller nach Anspruch 14, **dadurch gekennzeichnet, dass** das der Schwenkachse (45) abgekehrte Ende der Betätigungshandhabe (28) um ein gewisses Maß über den benachbarten Oberflächenbereich des Verbindungsstückes (10) auskragt, so dass ein gegenüber diesem Bereich des Verbindungsstückes (10) sich abhebender Griffbereich (54) gebildet ist.

25. Transportroller nach Anspruch 14, **dadurch gekennzeichnet, dass** die Kante (55) des der Schwenkachse (45) abgekehrten, den Griffbereich (54) bildenden Endes der Betätigungshandhabe (28) einen gerundeten Verlauf hat derart, dass die beiden Enden dieser Kante (55) jeweils dem benachbarten Bereich des Verbindungsstückes (10) naheliegen.

26. Transportroller nach Anspruch 23 und 25, **dadurch gekennzeichnet, dass** die zapfenartigen Fortsätze (53) den Kantenverlauf des erwähnten Griffbereiches (54) der Betätigungshandhabe (28) bis zu dem benachbarten Oberflächenbereich des Verbindungsstückes (10) fortsetzen.

27. Transportroller nach Anspruch 1, **dadurch gekennzeichnet, dass** Verbindungsstück (10) und Klemmvorrichtungen (25) aus Kunststoff bestehen.

## Claims

1. Transport cart (1) with two supporting bars (7) which, at one end, are connected to an axle (3), which carries two wheels (2), and to a supporting bracket or supporting frame (5) and which, at their other end, are connected to one another via a connecting component (10) which has through-bores (11) for two grip bars (8), of which one ends are connected to one another via a grip component and the other ends are guided in a telescopically displaceable manner in the supporting bars (7), the connecting component (10) having a clamping device (25) for fixing the position of the grip bars (8) in relation to the supporting bars (7), and the two grip bars (8) and/or supporting bars (7) each being assigned a clamping device (25) in or on the connecting component (10), **characterized in that** the clamping devices (25) have a common manually actuable operating element (26) which is of knee-joint-like design and of which the articulation arms (29, 30) are mounted in or on the connecting component (10) such that they can be pivoted about their common articulation (31) in a plane running transversely to the longitudinal axis of the grip and supporting bars (8 and 7, respectively), it being the case that those ends of the articulation arms (29, 30) which are directed away from the articulation (31) can be brought into direct or indirect clamping contact with the respectively adjacent grip bar (8), or can be brought into such contact with one or the other grip bar (8) which is respectively adjacent and, on the other hand, are supported on a region of the connecting component (10).

2. Transport cart according to Claim 1, **characterized in that** the operating element (26) is mounted in or on the connecting component (10) such that it can move freely ("float") to a certain extent in a plane parallel to the plane of the longitudinal axes of the grip and supporting bars (8 and 7, respectively), and in a direction running transversely to the longitudinal axes thereof, in order to compensate automatically for the forces to which the grip bars (8) are subjected by the articulation arms (29, 30) of the operating element (26).

3. Transport cart according to Claim 1, **characterized in that** the clamping contact is functional when the articulation arms (29, 30) are in the straightened-out state.

4. Transport cart according to Claim 3, **characterized in that that** end position of the articulation arms (29, 30) of the operating element (26) which is associated with clamping contact is located by a certain extent beyond the straightened-out position (the "dead centre") of the operating element (26).

5. Transport cart according to Claim 1, **characterized in that** the clamping contact is functional when the articulation arms (29, 30) are in the angled state.

6. Transport cart according to Claim 1, **characterized in that** clamping contact takes place by virtue of a region of the grip bars (8) being subjected to pressure.

7. Transport cart according to Claim 1, **characterized in that** clamping contact takes place by virtue of a region of the supporting bars (7) being subjected to pressure.

8. Transport cart according to Claim 7, **characterized in that that** region of the supporting bar (7) which is envisaged for clamping contact is designed as a resilient portion.

9. Transport cart according to Claim 1, **characterized in that** the articulation (31) comprises an articulation pin (32) located on the one articulation arm (29) and an articulation bore (33) provided on the other articulation arm (30).

10. Transport cart according to Claim 9, **characterized in that** the articulation connection between the articulation arms (29, 30) is releasable.

11. Transport cart according to Claim 1, **characterized in that** the articulation arms (29, 30) are assigned partially cylindrical supporting surfaces (40 to 43) which are located in the region of the articulation (31), are supported against one another and are coaxial in relation to the articulation (31).

12. Transport cart according to Claim 1, **characterized in that**, at the end which is directed away from the articulation (31), the articulation arms (29, 30) have a through-opening (37) which allows a grip bar (8) to be led through the same and has wall regions (38, 39) which are located opposite one another in the longitudinal direction of the relevant articulation arm (29 or 30) and butt against the grip bar (8).

13. Transport cart according to Claim 1, **characterized in that** the top region of the through-bores (11) provided in the connecting component (10) is adapted to the external diameter of a grip bar (8) .

14. Transport cart according to Claim 1, **characterized in that** the articulation arms (29, 30) are assigned an actuating handle (28) which is mounted on the connecting component (10) such that it can be pivoted about a pivot axis (45) running parallel to the pivot plane of the articulation arms (29, 30), and parallel to the plane of the grip and supporting bars (8 and 7, respectively), and which has drive and guide means (actuating pin 35, ball-like end 36) which correspond with drive and guide means (partially cylindrical groove 34) provided in the region of the articulation (31), on one articulation arm (29 or 30) and/or the other.

15. Transport cart according to Claim 14, **characterized in that** the drive and guide means provided on the articulation (31) is designed as a partially cylindrical groove (34) and the drive and guide means provided on the actuating handle (28) is designed as an actuating pin (35) which is guided in the abovementioned partially cylindrical groove (34) by way of a ball-like end (36) located at the free end of the actuating pin (35).

16. Transport cart according to Claim 15, **characterized in that** the drive and guide means (groove 34) provided in the region of the articulation (31) are provided in the one articulation arm (29) in an axis-parallel manner in relation to the articulation (31).

17. Transport cart according to Claim 16, **characterized in that** the drive and guide means (groove 34) provided in the region of the articulation (31) are provided in the one articulation arm (29) coaxially in relation to the articulation (31).

18. Transport cart according to Claim 17, **characterized in that** the drive and guide means (groove 34) provided in the region of the articulation (31) of the articulation arms (29, 30), in the use state of the transport cart (1), are located above and/or beneath the articulation (31).

19. Transport cart according to Claim 14, **characterized in that** the pivot axis (45) for the actuating handle (28) is provided within a recess (46) in the central part (15) of the connecting component (10), the recess accommodating adjacent regions of the actuating handle (28).

20. Transport cart according to Claim 14, **characterized in that** the pivot axis (45) for the actuating handle (28) is assigned a groove-like axial guide (44) in the actuating handle (28), this axial guide being located on that side of the actuating handle (28) which is directed away from the connecting component (10).

21. Transport cart according to Claim 14, **characterized in that**, on the side which is directed towards the articulation (31) and/or the drive and guide means (groove 34) provided in the region of the articulation (31), the actuating handle (28) has a pressure-exerting surface (48) which can be brought into pressure-exerting contact with the articulation (31) and/or the abovementioned drive and guide means (groove 34).

22. Transport cart according to Claim 14, **characterized in that**, at its end which is directed away from the groove-like axial guide (44), the actuating handle (28) has a tongue-like extension (51) which has a curvature corresponding to the distance from this axial guide (44), and/or from the pivot axis (45) of the actuating handle (28), and is assigned a correspondingly curved cover surface (52) on the connecting component (10).

23. Transport cart according to Claim 22, **characterized in that**, located laterally alongside the cover surface (52) for the tongue-like extension (51) of the actuating handle (28) and with alignment running transversely to the movement direction of this extension (51), pin-like extensions (53) are provided on the connecting component (10) and are integrally formed on the connecting component (10) to follow on, at a certain small distance, from that end of the actuating handle (28) which is directed away from the pivot axis (45), the tongue-like extension (51) of the actuating handle (28) being guided between the pin-like extensions (53).

24. Transport cart according to Claim 14, **characterized in that that** end of the actuating handle (28) which is directed away from the pivot axis (45) projects by a certain extent beyond the adjacent surface region of the connecting component (10) to form a grip region (54) which rises up in relation to this region of the connecting component (10).

25. Transport cart according to Claim 14, **characterized in that** the edge (55) of that end of the actuating handle (28) which is directed away from the pivot axis (45), and forms the grip region (54), has a rounded profile such that the two ends of this edge (55) are each in close proximity to the adjacent region of the connecting component (10).

26. Transport cart according to Claims 23 and 25, **characterized in that** the pin-like extensions (53) continue the edge profile of the abovementioned grip region (54) of the actuating handle (28) as far as the adjacent surface region of the connecting component (10).

27. Transport cart according to Claim 1, **characterized in that** the connecting component (10) and clamping devices (25) consist of plastic.

## Revendications

1. Chariot de transport (1) avec deux barres porteuses (7) qui sont connectées à l'une de leurs extrémités à un axe (3) portant deux roues (2) ainsi qu'à un arceau porteur ou un cadre porteur (5), et qui sont connectées l'une à l'autre à leur autre extrémité par le biais d'un élément de connexion (10) qui présente des orifices de passage (11) pour deux barres de préhension (8), dont les unes des extrémités sont connectées l'une à l'autre par le biais d'une poignée et dont les autres extrémités sont guidées de manière mobile télescopiquement dans les barres porteuses (7), l'élément de connexion (10) présentant un dispositif de serrage (25) pour fixer la position de la barre de préhension (8) par rapport aux barres porteuses (7), un dispositif de serrage respectif (25) dans ou sur l'élément de connexion (10) étant associé aux deux barres de préhension (8) ou aux barres porteuses (7), **caractérisé en ce que** les dispositifs de serrage (25) présentent un organe de réglage commun (26), de type articulation à genouillère et actionnable à la main, dont les bras articulés (29, 30) sont montés dans ou sur l'élément de connexion (10) de manière à pouvoir pivoter autour de leur articulation commune (31) dans un plan s'étendant transversalement à l'axe longitudinal des barres de préhension et des barres porteuses (8, respectivement 7), ses extrémités de bras articulés (29, 30) opposées à l'articulation (31) pouvant être amenées en contact de serrage direct ou indirect avec la barre de préhension (8) respective adjacente, ou avec l'une ou l'autre barre de préhension (8) respectivement adjacente, et s'appuyant d'autre part contre une région de l'élément de connexion (10).

2. Chariot de transport selon la revendication 1, **caractérisé en ce que** l'organe de réglage (26) est monté dans un plan parallèle au plan des axes longitudinaux des barres de préhension et des barres porteuses (8, respectivement 7) et dans une direction s'étendant transversalement à leurs axes longitudinaux dans une certaine mesure de manière librement mobile ("flottante") dans ou sur l'élément de connexion (10), pour obtenir une compensation automatique des forces exercées par les bras articulés (29, 30) de l'organe de réglage (26) sur les barres de préhension (8).

3. Chariot de transport selon la revendication 1, **caractérisé en ce que** le contact de serrage a lieu lorsque les bras articulés sont étirés (29, 30).

4. Chariot de transport selon la revendication 3, **caractérisé en ce que** la position d'extrémité des bras articulés (29, 30) de l'organe de réglage (26), associée au contact de serrage, est dans une certaine mesure située de part et d'autre de la position étirée (le "point mort") de l'organe de réglage (26).

5. Chariot de transport selon la revendication 1, **caractérisé en ce que** le contact de serrage a lieu lorsque les bras articulés (29, 30) sont coudés.

6. Chariot de transport selon la revendication 1, **caractérisé en ce que** le contact de serrage a lieu par pression sur une région des barres de préhension (8).

7. Chariot de transport selon la revendication 1, **caractérisé en ce que** le contact de serrage a lieu par pression sur une région des barres porteuses (7).

8. Chariot de transport selon la revendication 7, **caractérisé en ce que** la région de la barre porteuse (7) prévue pour le contact de serrage est réalisée sous forme de portion élastique.

9. Chariot de transport selon la revendication 1, **caractérisé en ce que** l'articulation (31) se compose d'un tourillon d'articulation (32) se trouvant sur l'un des bras articulés (29) et d'un orifice d'articulation (33) prévu sur l'autre bras articulé (30).

10. Chariot de transport selon la revendication 9, **caractérisé en ce que** la connexion articulée des bras articulés (29, 30) est desserrable.

11. Chariot de transport selon la revendication 1, **caractérisé en ce que** l'on associe aux bras articulés (29, 30) des surfaces de support (40 à 43) partiellement cylindriques, coaxiales à l'articulation (31), se trouvant dans la région de l'articulation (31), et s'appuyant les unes contre les autres.

12. Chariot de transport selon la revendication 1, **caractérisé en ce que** les bras articulés (29, 30) présentent, à l'extrémité opposée à l'articulation (31), une ouverture de passage (37) permettant le passage d'une barre de préhension (8), avec des régions de paroi (38, 39) opposées dans la direction longitudinale du bras articulé en question (29, respectivement 30), s'appliquant sur la barre de préhension (8).

13. Chariot de transport selon la revendication 1, **caractérisé en ce que** la région supérieure des orifices de passage (11) prévus dans l'élément de connexion (10) est adaptée au diamètre extérieur d'une barre de préhension (8).

14. Chariot de transport selon la revendication 1, **caractérisé en ce que** l'on associe aux bras articulés (29, 30) une manette d'actionnement (28) qui est montée sur l'élément de connexion (10) de manière à pouvoir pivoter autour d'un axe de pivotement (35) s'étendant parallèlement au plan de pivotement des bras articulés (29, 30) et parallèlement au plan des barres de préhension et des barres porteuses (8, respectivement 7), et qui présente des moyens d'entraînement et de guidage (tourillon de réglage 35, extrémité sphérique 36), qui correspondent avec des moyens d'entraînement et de guidage (rainure partiellement cylindrique 34) prévus dans la région de l'articulation (31) sur un et/ou sur l'autre bras articulé (29 respectivement 30).

15. Chariot de transport selon la revendication 14, **caractérisé en ce que** le moyen d'entraînement et de guidage prévu sur l'articulation (31) est réalisé sous forme de rainure partiellement cylindrique (34) et **en ce que** le moyen d'entraînement et de guidage prévu sur la manette d'actionnement (28) est réalisé sous forme de tourillon de réglage (35), qui est guidé dans ladite rainure partiellement cylindrique (34) avec une extrémité (36) de forme sphérique, située à l'extrémité libre du tourillon de réglage (35).

16. Chariot de transport selon la revendication 15, **caractérisé en ce que** les moyens d'entraînement et de guidage (rainure 34) prévus dans la région de l'articulation (31) sont prévus avec leurs axes parallèles à l'articulation (31) dans l'un des bras articulés (29).

17. Chariot de transport selon la revendication 16, **caractérisé en ce que** les moyens d'entraînement et de guidage (rainure 34) prévus dans la région de l'articulation (31) sont prévus coaxialement à l'articulation (31) dans l'un des bras articulés (29).

18. Chariot de transport selon la revendication 17, **caractérisé en ce que** les moyens d'entraînement et de guidage (rainure 34) prévus dans la région de l'articulation (31) des bras articulés (29, 30) se trouvent au-dessus ou en dessous de l'articulation (31) dans l'état d'utilisation du chariot de transport (1).

19. Chariot de transport selon la revendication 14, **caractérisé en ce que** l'axe de pivotement (45) pour la manette d'actionnement (28) est prévu à l'intérieur d'un évidement (46) dans la partie centrale (15) de l'élément de connexion (10), recevant les régions adjacentes de la manette d'actionnement (28).

20. Chariot de transport selon la revendication 14, **caractérisé en ce que** l'axe de pivotement (45) pour la manette d'actionnement (28) est associé à un guidage axial (44) en forme de rainure dans la manette d'actionnement (28) se trouvant du côté de la manette d'actionnement (28) opposé à l'élément de connexion (10).

21. Chariot de transport selon la revendication 14, **caractérisé en ce que** la manette d'actionnement (28) présente, sur le côté tourné vers l'articulation (31) ou vers les moyens d'entraînement et de guidage (rainure 34) prévus dans la région de l'articulation (31), une surface de pression (48) pouvant être amenée en contact de pression avec l'articulation (31) ou lesdits moyens d'entraînement et de guidage (rainure 34).

22. Chariot de transport selon la revendication 14, **caractérisé en ce que** la manette d'actionnement (28) présente, à son extrémité opposée au guidage axial (44) en forme de rainure, une saillie (51) en forme de patte avec une courbure correspondant à la distance à ce guidage axial (44) ou à l'axe de pivotement (45) de la manette d'actionnement (28), à laquelle est associée une surface de recouvrement (52) de courbure correspondante sur l'élément de connexion (10).

23. Chariot de transport selon la revendication 22, **caractérisé en ce que** des saillies (53) en forme de tourillon situées latéralement à côté de la surface de recouvrement (52) pour la saillie (51) en forme de patte de la manette d'actionnement (28) et dans un alignement prévu transversalement à la direction de déplacement de cette saillie (51) sont prévues sur l'élément de connexion (10), et sont façonnées sur l'élément de connexion (10) en se raccordant avec une petite distance déterminée à l'extrémité de la manette d'actionnement (28) opposée à l'axe de pivotement (45), et la saillie (51) en forme de patte de la manette d'actionnement (28) est guidée entre celles-ci.

24. Chariot de transport selon la revendication 14, **caractérisé en ce que** l'extrémité de la manette d'actionnement (28) opposée à l'axe de pivotement (45) dépasse dans une certaine mesure au-delà de la région de la surface adjacente de l'élément de connexion (10), de sorte qu'une région de préhension (54) rehaussée par rapport à cette région de l'élément de connexion (10) soit formée.

25. Chariot de transport selon la revendication 14, **caractérisé en ce que** l'arête (55) de l'extrémité de la manette d'actionnement (28) opposée à l'axe de pivotement (45) et formant la région de préhension (54) présente une allure arrondie de telle sorte que les deux extrémités de cette arête (55) soient situées à chaque fois à proximité de la région adjacente de l'élément de connexion (10).

26. Chariot de transport selon les revendications 23 et 25, **caractérisé en ce que** les saillies (53) en forme de tourillon prolongent l'allure de l'arête de ladite région de préhension (54) de la manette d'actionnement (28) jusqu'à la région de surface adjacente de l'élément de connexion (10).

27. Chariot de transport selon la revendication 1, **caractérisé en ce que** l'élément de connexion (10) et les dispositifs de serrage (25) sont en plastique.
